# EUROPEAN PATENT APPLICATION

(11) **EP 0 624 964 A1**
(43) Date of publication of application: **17.11.1994**
(21) Application number: 94303230.0
(22) Date of filing: 04.05.1994
(51) Int. Cl.: H04L 12/24

(54) **Database access**

(30) Priority: 14.05.1993 GB 9309956
(71) Applicant: GPT LIMITED, Coventry, CV3 1HJ (GB)
(72) Inventor: Cook, John, Cheylesmore, Coventry CV3 5LT (GB); Tavanyar, Simon Edwin, Altamonte Springs, Florida 32714 (US)
(74) Representative: Branfield, Henry Anthony

(57) **Abstract**

A Generic Database Agent (G-DBA), provides the database access component of a Service Logic Execution Environment (SLEE). The G-DBA provides for online deployment of new data objects to a relational database (RDBMS) in a high availability real-time system, requiring conversion between CCITT's Common Management Information Protocol (CMIP), and Structured Query Language.

A database access component provides a transform between a Common Management Information Protocol and Structural Query Language.

## Description

The present invention relates to a Generic Database Agent (G-DBA), the database access component of a Service Logic Execution Environment (SLEE). The G-DBA provides for online deployment of new data objects to a relational database (RDBMS) in a high availability real-time system, requiring conversion between CCITT's Common Management Information Protocol (CMIP), and Structured Query Language (SQL). The heart of the design is a transform for each CMIP operation which distributes CMIP parameters to a series of dynamic SQL Statements in accordance with updateable dictionary tables in the RDBMS.

The invention is to be employed in an Advanced Intelligent Networks (AIN) Service Logic Execution Environment (SLEE), which itself forms a part of an Adjunct and Service Control Point (SCP) System.

The requirements for SLEE were set out in the following documents issued by Bellcore:-
1. FR-NWT-001132, AIN Release 1 Service Logic Program Framework Generic Requirements.
2. TA-NWT-001124, AIN Release 1 SLEE Generic Requirements.

The SLEE is further described together with a Switch Control therefor in copending application GB 9307647.9 imported herein by reference.

The SLEE provides a higher-level layer of functionality above the Operating System (OS) protecting the service implementations above the SLEE from changes in the OS, and providing them with more telecommunications oriented functionality than a general-purpose OS.

Services are implemented above the SLEE as a number of Service Logic Programs (SLPs) which make use of the Bellcore defined Application Programming Interface (API) presented by the SLEE.

According to the present invention there is provided a telecommunications Service Logic Execution Environment, a database access component (DBA) which provides a transform between a Common Management Information Protocol (CMIP) and Structured Query Language (SQL).

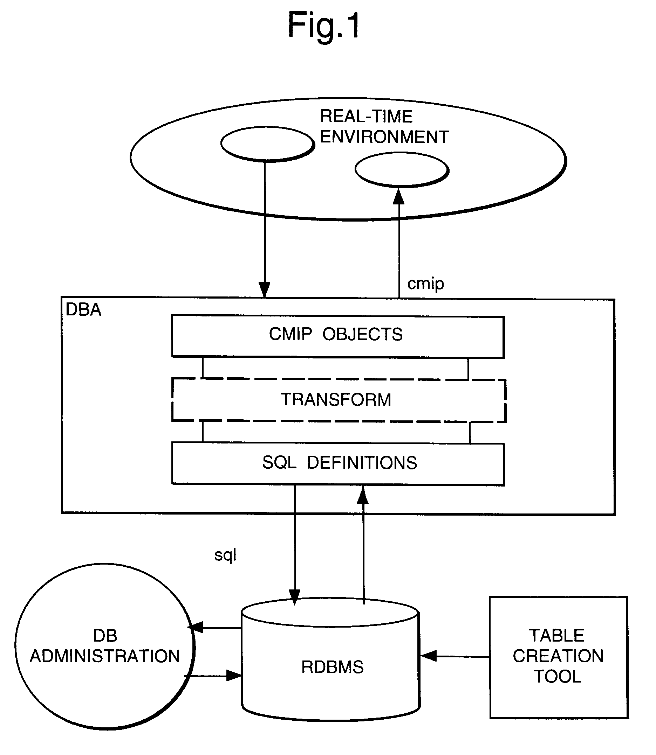

The present invention will now be described by way of example, with reference to the accompanying drawings, in which:-
Figure 1 is a context diagram for the Generic Database Agent;

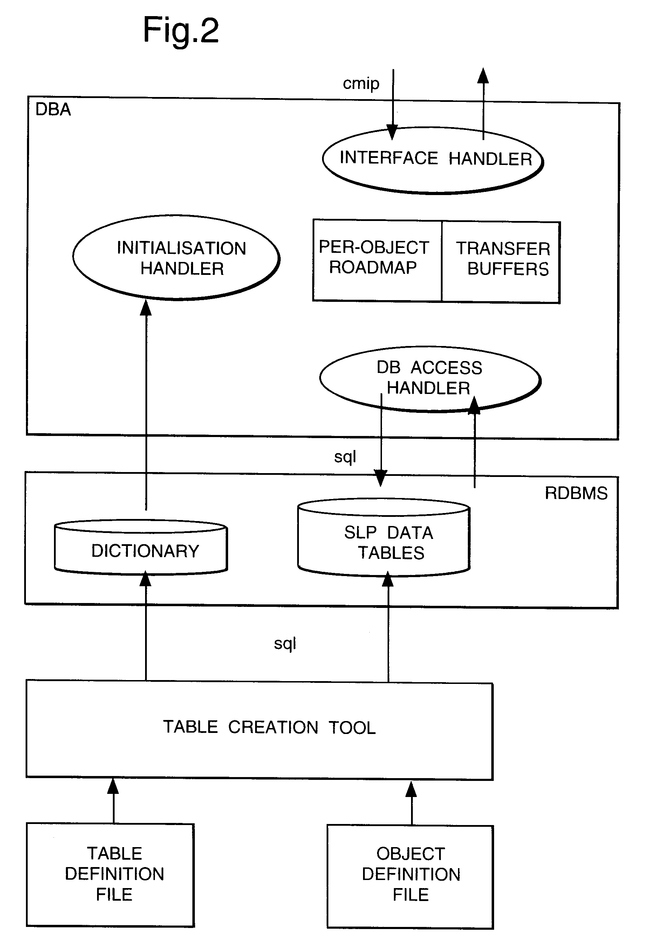

Figure 2 is a diagrammatic example of a Database Agent design;

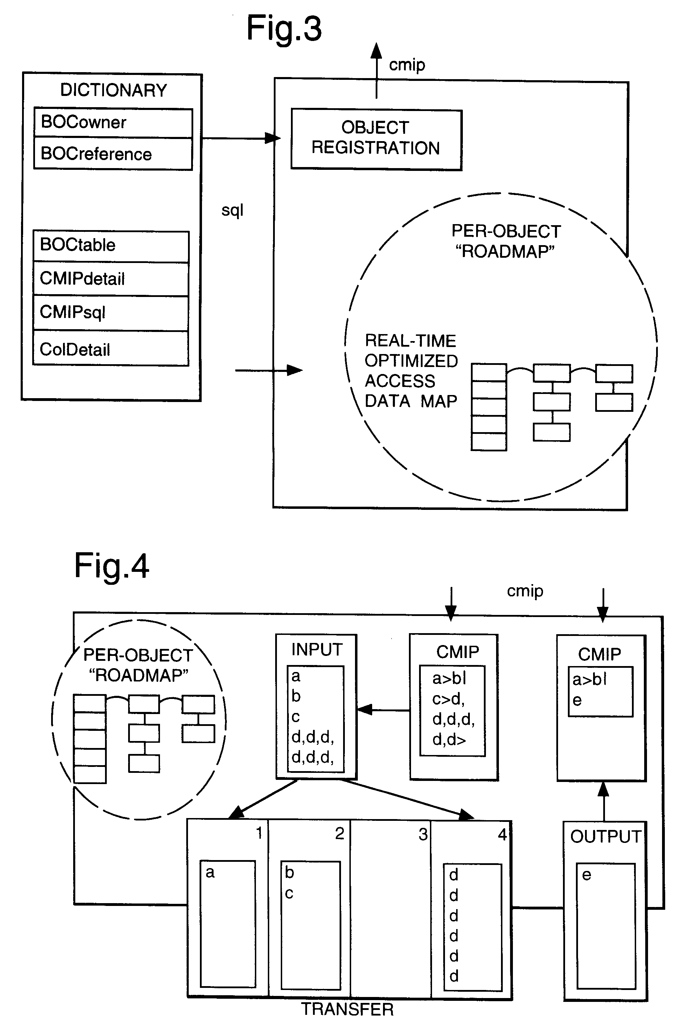

Figure 3 is a diagrammatic example of an Initialisation Handler of the Database Agent of Figure 2;
Figure 4 is a diagrammatic example of an Interface Handler of the Database Agent of Figure 2; and

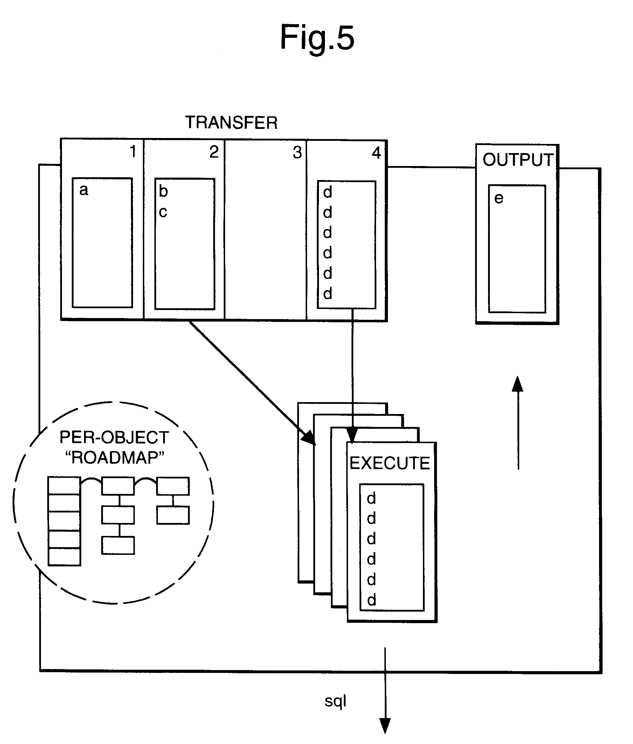

Figure 5 is a diagrammatic example of a Database Access Handler of the Database Agent of Figure 2.

An important part of the SLEE capability is to provide dynamic (i.e., online) creation and deployment of SLPs, their persistent data, and their management functionality. The role of the Generic Database Agent (G-DBA) is to provide a CMIP interface for SLPs, which supports the creation, access and management of new SLP persistent data without stopping the system.

The interface requirements of the invention are two of the standard languages for defining data objects and their operations. One is CMIP, or Common Management Information Protocol, and the other is SQL, or Structured Query Language.

CMIP is chosen as the application interface standard, because it defines data in object class hierarchies, with a full range of operations. This is especially suited to management and real-time applications.

SQL is the commercial database standard, because it defines objects as relational entities or tables, which benefit from extremely flexible access techniques. These techniques allow data in SQL tables to be deployed, displayed and extended very easily.

Therefore, while CMIP provides the ideal object definition language for the application, SQL provides the ideal data definition language for a system administrator.

The present invention is to provide a dynamically configurable mechanism to support a class hierarchy of CMIP data objects for a real-time system, by mapping onto entities and relations from a commercial RDBMS. One example of a suitable RDBMS is Informix.

The problem of providing new objects dynamically in the system is solved in two stages. In the first instance, a custom Table Creation Tool (TCT) uses the standard SQL table commands of CREATE and ALTER to modify Data Table structures, and SQL INSERT / DELETE / UPDATE to modify Dictionary Table entries. All this is done online. (The dictionary tables specify how the data table is to be accessed and updated via CMIP.)

The second stage is performed in the DBA itself, by interpreting fresh CMIP requests on the new object according to the dictionary description that was supplied by the TCT. To facilitate this, dictionary data is loaded into DBA local memory on start-up, and then for each new object on request from the Service Management System.

In the present example there is a transformation mechanism that permits CMIP objects and their operations to be mapped dynamically onto tables defined in SQL. The mechanism is independent of the structure or function of either the CMIP objects or the SQL tables, so that it can work with any objects that can be dynamically defined.

This is achieved by utilising the static dictionary data for each object defined to determine a command sequence, and then manipulating the object instances as they come in via a sequence of Transfer Buffers.

The static data is a set of dictionary tables in SQL which :
- describes the transformation of each CMIP operation to a set of SQL command strings
- maps the CMIP object attributes on to the appropriate data table names and columns
- defines the intermediate DBA storage structure for each object

The CMIP operations on the data include both passive and active commands. A passive command typically includes a set of key fields on input, and expects a set of result data on output. Active commands include the key fields, but may also include a set of non-key data attributes which are to be applied to the given object, either as a new CREATE, or a SET operation. The only output from an active command is a success or failed indicator.

Therefore there is an intermediate structure in the DBA which must provide the facility to pass in data and also extract it from the database. This structure is realised as a three-tier set of buffers.

First are the Input and Output buffers which are used to decompose and construct the CMIP message. Next are the Transfer Buffers, which model the input data as it is required by each of the sequence of SQL commands. Finally come the Execution Buffers, one for input and one for output, which are used to contain the actual data used when each SQL command is applied.

The DBA function is divided into the following modules:

An Interface Handler which communicates with applications using CMIP, and transfers the data from the message via the Input Buffer into a set of Transfer Buffers. These break up the input data into the components that can be applied using the prescribed sequence of SQL commands. There is a different configuration of data in the Transfer Buffers for each CMIP object / operation combination.

The Transfer Buffers are numbered to correlate with each SQL command in the sequence for this operation. The Interface Handler uses dictionary information to determine which input attributes go in which Transfer Buffer.

It is permissible to contain multiple 'rows' of data in a Transfer Buffer, since the buffer also contains the number of rows present.

The second module is the Database Handler, which is invoked by the Interface Handler, and is passed a reference to the Transfer Buffer array. It then begins to apply the sequence of SQL commands. To do so, it copies data into the Execution Input Buffer as follows:-

The dictionary data for each SQL command in the sequence indicates which data it expects in the corresponding Transfer Buffer, and which data must be derived from the output of a previous SQL command. In the latter case, the Database Handler searches the Transfer Buffer of the given previous command to obtain the required parameter.

An example of this is where an SQL INSERT command uses a database-generated serial number, this number must be 'remembered' for use in subsequent commands. After processing an SQL command, the Database Handler stores away any derived parameters in the Transfer Buffer for this sequence position, so that when performing subsequent commands, it will find what is needed.

Another example of derived parameters is where rows from many tables may be deleted by a single CMIP operation. The keys to these tables must be derived from the database before any deletions start.

The Database Handler steps down its list of SQL commands, building the data in the Execution Input Buffer, applying the command, and moving derived parameters back into the corresponding Transfer Buffer. If the SQL command expects multiple rows, it serially copies data from its Transfer Buffer into the Execution buffer.

One version of the DBA would not allow multiple sets of multiple rows, it would only allow the last group in the CMIP message to be multiple rows. Further versions could permit a more complex intermediate structure where derived data is associated with each row of a multiple set.

On output, the Database Handler simply extracts data from each SQL command into the Execution Output buffer, and from there puts it additively into the main Output Buffer, stepping the pointer along as the data is added. The Interface Handler, then transforms the contents of the output buffer into a CMIP message, using the object structure defined in the dictionary.

The function of the Initialisation Handler is simply to build the static dictionary information into a real-time, optimized access data map (ROADMAP) in dynamic local memory, and to advertise the objects in the database to the real-time system via a runtime registration mechanism.

Considering modular decomposition of the Database Agent, the main module performs various initialising steps and calls the local DBA initialisation module. It then enters into a continuous loop to process incoming events. Incoming CMIP requests are passed on to the CMIP interface handler.

The local DBA initialisation module is responsible for opening the database for subsequent throughput of the DBA.

The Base_Object_Class Owner (BOCowner) table is used to provide a list of Base Object Classes (BOCs) handled by the DBA. For each BOC handled an SLEE Functional Component (FC) is called to add an entry to the object registry. This is used to route requests from SLPs to the DBA.

The module also calls the BOC access initialisation module for each BOC handled.

The module exists to separate the inherited generic components from the DBA's own specific initialisation activity.

The CMIP interface handler is responsible for limited validation of incoming messages. If the incoming message is a DB access request, the DB access module is called to process the request.

All outgoing CMIP messages are also sent from this module, hence the DB access module is expected to return a status value.

The module exists for containment of CMIP specific code, to support introduction of an enhanced CMIP at a later date, or an entirely different protocol if CMIP is replaced.

The data-processing module is a sub-module of the CMIP i/f handler containing the code for translating the CMIP message body into its intermediate form for execution.

The DB access module receives pointers to intermediate execution buffers (for input and output), together with the BOC identifier, a pointer to BOC instance details, CMIP verb and if available the corresponding CMIP Action parameter. This allows selection of which BOC to act upon, and what the required action is. The combination of BOC and action type (with optional parameter) will be used to select the SQL command details for subsequent execution. The command details are held in dynamic local memory as set up by the BOC access initialisation module (see below).

The access handling is treated as a single module to contain the SQL specific coding. This will help control later updates if required, to support either SQL modifications, use of transaction processing or shared memory usage.

The BOC access initialisation module accesses the data dictionary tables in the DB to construct, in dynamic memory, all the information required for the DB access module to generically access the data for each BOC handled. All possible preparation is performed at initialisation.

A dynamic memory structure is used for holding prepared data. This will be a write once structure (read many times by the DB access module).

At runtime, the dictionary can be updated to create or update tables and BOCs dynamically. For this reason the module has been separated off from other DBA initialisation, so that it can be invoked independently as required.

## Claims

1. In a telecommunications Service Logic Execution Environment, a database access component (DBA) provides a transform between a Common Management Information Protocol (CMIP) and Structured Query Language (SQL).

2. A DBA as claimed in Claim 1, providing a CMIP interface for Service Logic Programs (SLPs).

3. A DBA as claimed in Claim 2, wherein new objects are created dynamically by modification of dictionary table structures and entries using a Table Creation Tool (TCT) interpreting CMIP requests according to the dictionary description supplied by the TCT.

4. A DBA as claimed in any preceding claim, wherein a transformation mechanism is provided to map CMIP objects and their operations dynamically onto tables defined in SQL.

5. A DBA as claimed in any preceding claim, comprising
(i) Input and Output Buffers to decompose and construct a CMIP message;
(ii) Transfer Buffers to model the input data required by the SQL commands;
(iii) Execution Buffers, one each for input and output to contain the data for each SQL command.

6. A DBA as claimed in Claim 5, further comprising a Interface Handler which transfers data from a CMIP message received via the input buffer into Transfer Buffers.

7. A DBA as claimed in Claim 6, comprising a Database Handler invoked by the Interface Handler, to pass a reference to the Transfer Buffers and to apply a sequence of SQL commands.
